(19) **Europäisches Patentamt**

**European Patent Office**

**Office européen des brevets**

(11) **EP 4 140 950 B1**

(12) # EUROPEAN PATENT SPECIFICATION

(45) Date of publication and mention
of the grant of the patent:
**22.10.2025 Bulletin 2025/43**

(21) Application number: **22191891.5**

(22) Date of filing: **24.08.2022**

(51) International Patent Classification (IPC):
$C01B\ 33/12^{(2006.01)}$    $H01M\ 4/38^{(2006.01)}$
$H01M\ 10/0525^{(2010.01)}$    $C01B\ 33/02^{(2006.01)}$
$C01B\ 33/113^{(2006.01)}$    $H01M\ 4/134^{(2010.01)}$
$H01M\ 4/36^{(2006.01)}$    $H01M\ 4/485^{(2010.01)}$
$H01M\ 4/131^{(2010.01)}$

(52) Cooperative Patent Classification (CPC):
**C01B 33/02; C01B 33/113; H01M 4/131;
H01M 4/134; H01M 4/364; H01M 4/386;
H01M 4/485; H01M 10/0525;** C01P 2002/74;
C01P 2002/82; C01P 2004/64; Y02E 60/10

(54) **NEGATIVE ELECTRODE MATERIAL FOR SECONDARY BATTERY**

NEGATIVES ELEKTRODENMATERIAL FÜR SEKUNDÄRBATTERIE

MATÉRIAU D'ÉLECTRODE NÉGATIVE POUR BATTERIE SECONDAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2021 KR 20210113935**

(43) Date of publication of application:
**01.03.2023 Bulletin 2023/09**

(73) Proprietor: **POSCO Silicon Solution Co., Ltd
Sejong-si 30011 (KR)**

(72) Inventors:
• **LEE, Jae Woo
30152 Sejong-si (KR)**

• **PARK, Jin Gee
42287 Daegu (KR)**
• **CHOI, Sun Ho
30075 Sejong-si (KR)**
• **CHEON, Jung Hoon
30153 Sejong-si (KR)**

(74) Representative: **Laufhütte, Dieter
Lorenz Seidler Gossel
Rechtsanwälte Patentanwälte
Partnerschaft mbB
Widenmayerstraße 23
80538 München (DE)**

(56) References cited:
**EP-A1- 3 748 741**    **EP-A1- 3 993 092
WO-A1-2021/034109**

## Description

### TECHNICAL FIELD

The following disclosure relates to a negative electrode material for a secondary battery, and more particularly, to a negative electrode material for a secondary battery having improved capacity, initial efficiency, and cycle characteristics.

### BACKGROUND

A demand for a secondary battery, which may be used for a long time, that is, has a long life as well as has high energy density and high power density properties, continues to increase, in various industrial fields such as electronics products, electric/hybrid vehicles, and aerospace/drones.

In general, a secondary battery capable of charging and discharging is formed of a positive electrode, a negative electrode, an electrolytic material, and a separator, and among them, a representative negative electrode material which is included in the negative electrode and commercially used is graphite, but a theoretical maximum capacity of the graphite is only 372 mAh/g.

Thus, in order to implement a secondary battery having high energy density, a study to use chalcogen-based materials such as sulfur (maximum capacity: 1,675 mAh/g), silicon-based materials such as silicon (maximum capacity: 4,200 mAh/g) or a silicon oxide (maximum capacity: 1,500 mAh/g), transition metal oxides, and the like as a secondary battery negative electrode material has been conducted continuously, and among various materials, a silicon-based negative electrode material is receiving the most attention.

However, when particulate silicon is used as a negative electrode material, battery characteristics are rapidly deteriorated by insulation, particle desorption, an increase of contact resistance, and the like due to large volume change of silicon as a charge/discharge cycle is repeated, whereby the function as a battery is already lost at less than 100 cycles, and in the case of a silicon oxide, lithium is lost by irreversible products such as lithium silicate or lithium oxide and initial charge/discharge efficiency is rapidly decreased.

In order to solve the problems of the silicon-based negative electrode material, technologies such as nanosizing silicon into a form of wire or the like and compositing the nano-sized silicon with a carbon material, or doping a silicon oxide with a dissimilar metal to form a composite oxide phase or pre-lithiate the silicon oxide have been suggested, but the initial charge/discharge efficiency, cycle characteristics, high rate characteristics are still poor, so that commercialization is difficult.

[Related Art Documents]

> [Patent Documents]: WO 2021/034109 A1; EP 3748741 A1
> Korean Patent Laid-Open Publication No. 10-2020-0065514
> Korean Patent Laid-Open Publication No. 10-2015-0045336

### SUMMARY

An embodiment of the present invention is directed to providing a silicon-based negative electrode material for a secondary battery having a high battery capacity, improved initial reversible efficiency, and stable cycle characteristics.

In one general aspect, a negative electrode material for a secondary battery is in a particle form including: a matrix including a silicon oxide, a composite oxide of silicon and one or more doping elements selected from the group consisting of alkali metals, alkaline earth metals, and post transition metals, or a mixture thereof; and crystalline silicon nanoparticles dispersed and embedded in the matrix, wherein a compressive strength (St) of the particles is 100 MPa or more, and a ratio ($A_1A_2$) between an area of a first peak ($A_1$) and an area of a second peak ($A_2$) satisfies 0.8 to 6, a diffraction angle $2\theta$ being positioned in a range of 10° to 27.4° in the first peak and being positioned in a range of $28\pm0.5$° in the second peak, in an X-ray diffraction pattern using a CuKα ray.

In the negative electrode material for a secondary battery according to an exemplary embodiment of the present invention, a ratio ($L_1L_2$) between a full width at half maximum of the first peak (FWHM ($L_1$)) and FWHM of the second peak ($L_2$) may be 6 to 15, the diffraction angle $2\theta$ being positioned in a range of 10° to 27.4° in the first peak and being positioned in a range of $28\pm0.5$° in the second peak, in an X-ray diffraction pattern using a CuKα ray.

In the negative electrode material for a secondary battery according to an exemplary embodiment of the present invention, an intensity ratio ($I_1/I_2$) between a maximum intensity of the first peak ($I_1$) and a maximum intensity of the second peak ($I_2$) may be 0.05 to 1.25.

In the negative electrode material for a secondary battery according to an exemplary embodiment of the present invention, the first peak may be derived from an amorphous silicon oxide, and the second peak may be derived from crystalline silicon.

In the negative electrode material for a secondary battery according to an exemplary embodiment of the present invention, the FWHM of a Raman peak of nanoparticulate silicon included in the negative electrode material may be larger than the FWHM of a Raman peak of bulk monocrystalline silicon.

In the negative electrode material for a secondary battery according to an exemplary embodiment of the present invention, the FWHM of the Raman peak of the nanoparticulate silicon included in the negative electrode material may be 4 to 20 $cm^{-1}$.

In the negative electrode material for a secondary battery according to an exemplary embodiment of the present invention, the following Equation 1 may be satisfied based on the silicon Raman signal:

$$\text{(Equation 1)}$$

$$1 < WN(Si)/WN(ref)$$

wherein WN(ref) is a central wave number of a Raman peak of bulk monocrystalline silicon, and WN(Si) is a central wave number of a Raman peak of nanoparticulate silicon included in the negative electrode material.

In the negative electrode material for a secondary battery according to an exemplary embodiment of the present invention, in a two-dimensional mapping analysis based on the silicon Raman signal, a difference between a maximum value and a minimum value of shift as defined by the following Equation 2 under the following mapping conditions may be 5 $cm^{-1}$ or less:

mapping conditions: excitation laser wavelength = 532 nm, laser power = 0.1 mW, detector exposure time (exposure time per unit analysis area) = 1 sec, focal length = 30 mm, grating = 1800 grooves/mm, pixel resolution = 1 $cm^{-1}$, mapping size = 14 $\mu$m $\times$ 14 $\mu$m,

$$\text{(Equation 2)}$$

$$\text{Shift} = WN^i(Si) - WN(ref)$$

wherein WN(ref) is as defined in Equation 1, and $WN^i$(Si) is a central wave number of a Raman peak of nanoparticulate silicon included in the negative electrode material in one pixel which is a unit analysis area in a mapping analysis.

In the negative electrode material for a secondary battery according to an exemplary embodiment of the present invention, a difference between a maximum value and a minimum value of shift as defined by the following Equation 2 may be 5 $cm^{-1}$ or less, in a shift analysis based on the silicon Raman signal at 20 random positions different from each other in a 20 mm x 20 mm specimen:

mapping conditions: excitation laser wavelength = 532 nm, laser power = 0.1 mW, detector exposure time (exposure time per unit analysis area) = 1 sec, focal length = 30 mm, grating = 1800 grooves/mm, pixel resolution = 1 $cm^{-1}$

$$\text{(Equation 2)}$$

$$\text{Shift} = WN^i(Si) - WN(ref)$$

wherein WN(ref) is as defined in Equation 1, and $WN^i$(Si) is a central wave number of a Raman peak of nanoparticulate silicon included in the negative electrode material in one pixel which is a unit analysis area in a mapping analysis.

In the negative electrode material for a secondary battery according to an exemplary embodiment of the present invention, when the stress of silicon nanoparticles is analyzed at 20 random positions different from each other in a 20 mm x 20 mm specimen, a compressive stress may be 80% or more.

In the negative electrode material for a secondary battery according to an exemplary embodiment of the present invention, a plurality of negative electrode material particles may be included, the particles having composition uniformity between particles according to the following Equation 3:

$$(\text{Equation 3})$$

$$1.3 \leq UF(D)$$

wherein UF(D) is a value obtained by dividing an average doping element composition between negative electrode material particles by a standard deviation of a doping element composition, based on wt% composition.

In the negative electrode material for a secondary battery according to an exemplary embodiment of the present invention, an average diameter of the silicon nanoparticles may be 2 to 30 nm.

In the negative electrode material for a secondary battery according to an exemplary embodiment of the present invention, an interface between the silicon nanoparticles and the matrix may be a coherent interface.

In the negative electrode material for a secondary battery according to an exemplary embodiment of the present invention, the doping element may be one or more selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

In the negative electrode material for a secondary battery according to an exemplary embodiment of the present invention, the negative electrode material may be a particle phase having an average diameter in the order of $10^0$ μm to $10^1$ μm.

In the negative electrode material for a secondary battery according to an exemplary embodiment of the present invention, the negative electrode material may further include a coating layer containing carbon.

In another general aspect, a secondary battery includes the negative electrode material for a secondary battery.

Other features and aspects will be apparent from the following detailed description, the drawings, and the claims.

**BRIEF DESCRIPTION OF THE DRAWINGS**

FIG. 1 is a drawing illustrating an EDS line profile of Mg in a cross section of a negative electrode material manufactured according to an exemplary embodiment of the present invention.

FIG. 2 is a drawing illustrating an XRD pattern of the negative electrode material manufactured according to an exemplary embodiment of the present invention.

FIG. 3 is a drawing illustrating a measured Raman spectrum of the negative electrode material manufactured according to an exemplary embodiment of the present invention.

FIG. 4 is a drawing illustrating two-dimensional mapping results based on a silicon Raman signal of the negative electrode material manufactured according to an exemplary embodiment of the present invention.

FIG. 5 is a drawing illustrating results of measuring strength and elastic modulus of the negative electrode material manufactured according to an exemplary embodiment of the present invention.

FIGS. 6A and 6B are drawings illustrating a charge/discharge capacity and a capacity retention rate depending on charge/discharge cycles of a half battery provided with a negative electrode including the negative electrode material manufactured according to an exemplary embodiment of the present invention, respectively.

FIG. 7 is a dQ/dV graph of a half battery provided with a negative electrode including the negative electrode material manufactured according to an exemplary embodiment of the present invention.

FIG. 8 is a high magnification transmission electron micrograph in which the negative electrode material manufactured according to an exemplary embodiment of the present invention is observed.

FIG. 9 is scanning electron micrographs in which the cross section and the thickness of a negative electrode before lithiation and the cross section and the thickness of a negative electrode after lithiation were observed, in the negative electrode including the negative electrode material manufactured according to an exemplary embodiment of the present invention.

**DETAILED DESCRIPTION OF EMBODIMENTS**

Hereinafter, the negative electrode material for a secondary battery of the present invention will be described in detail with reference to the accompanying drawing.

The present applicant found that in a silicon-based negative electrode material composited with silicon and a silicon-based oxide, the mechanical properties and the electrochemical properties of the negative electrode material are significantly affected by the residual stress of silicon included in the negative electrode material. As a result of an in-depth study based on the finding, it was found that when silicon is dispersed in a silicon-based oxide-based matrix in a nanoparticle form and has residual compressive stress, the mechanical and electrochemical properties of the negative electrode material are significantly improved, thereby completing the present invention.

Thus, since the negative electrode material according to the present invention based on the finding described above shows mechanical properties and electrochemical properties which may not be obtained from a conventional silicon-based negative electrode material, by a combination of silicon which is dispersed in a nanoparticle form and has residual compressive stress and a matrix, the present invention includes various embodiments based on the physical properties of the silicon-based negative electrode material according to the present invention.

In the present invention, the matrix may refer to a solid medium in which nanoparticulate silicon is dispersed, and may refer to a material forming a continuum as compared with silicon nanoparticles which are a dispersed phase in the negative electrode material. In the present invention, the matrix may refer to material(s) other than metal silicon (Si) in the negative electrode material.

In the present invention, the nanoparticles may refer to particles in the order of $10^0$ nm to $10^2$ nm having a size (diameter) usually defined as nanoparticles, substantially having a diameter of 500 nm or less, specifically 200 nm or less, more specifically 100 nm or less, and more specifically 50 nm or less.

In the present invention, the negative electrode material for a secondary battery includes a negative electrode material for a lithium secondary battery, but is not necessarily limited thereto. The negative electrode material of the present invention may be used as an active material of a secondary battery such as a sodium battery, an aluminum battery, a magnesium battery, a calcium battery, and a zinc battery, and may be used in other conventional energy storage/production devices using a silicon-based material, such as a super capacitor, a dye-sensitized solar cell, and a fuel cell.

The negative electrode material for a secondary battery according to an exemplary embodiment (I) of the present invention is in a particle form including: a matrix including a silicon oxide, a composite oxide of silicon and one or more doping elements selected from the group consisting of alkali metals, alkaline earth metals, and post transition metals, or a mixture thereof; and crystalline silicon nanoparticles dispersed and embedded in the matrix, wherein a compressive strength (St) of the particles is 100 MPa or more, and a ratio ($A_1A_2$) between an area of a first peak ($A_1$) and an area of a second peak ($A_2$) satisfies 0.8 to 6, a diffraction angle $2\theta$ being positioned in a range of 10° to 27.4° in the first peak and being positioned in a range of $28\pm0.5°$ in the second peak, in an X-ray diffraction pattern using a CuK$\alpha$ ray.

The compressive strength St of the particles may be calculated by the equation $St = \frac{2P}{\pi dL}$ , as is known, wherein P is a force applied, d is a diameter of the particle, and L is a length of the particle in a direction parallel to a direction in which a force is applied and may be measured using a microcompression tester (as an example, MCT-W500-E, Shimadzu). Here, L may be a particle diameter, and the compressive strength may be calculated by the equation $St = \frac{2P}{\pi dd}$ , of course.

Specifically, the particle compressive strength of the particulate negative electrode material for a secondary battery may be 100 MPa or more, 105 MPa or more, 110 MPa or more, 115 MPa or more, 120 MPa or more, 125 MPa or more, 130 MPa or more, 135 MPa or more, 140 MPa or more, 145 MPa or more, 150 MPa or more, 155 MPa or more, or 160 MPa or more, substantially 250 MPa or less, more substantially 200 MPa or less.

The negative electrode material for a secondary battery according to the present invention, which is in a particle form including crystalline silicon nanoparticles dispersed and embedded in the matrix described above, shows an excellent compressive strength of 100 MPa or more, satisfies a ratio ($A_1A_2$) between an area of a first peak ($A_1$) and an area of a second peak ($A_2$) of 0.8 to 6, a diffraction angle $2\theta$ being positioned in a range of 10° to 27.4° in the first peak and being positioned in a range of $28\pm0.5°$ in the second peak, in an X-ray diffraction pattern using a CuK$\alpha$ ray, thereby improved mechanical and electrochemical properties, and, in particular, has a capacity retention rate at a level of practical commercialization of a secondary battery provided with a silicon-based negative electrode material together with a high discharge capacity.

In addition, the negative electrode material having excellent particle compressive strength means that the particulate negative electrode material is not physically damaged during an electrode manufacturing process of manufacture of a negative electrode material slurry - application of the slurry on a current collector and drying - rolling (calendering) which was previously established in the conventional secondary battery field, and also means that the damage of an electrode (negative electrode) pore structure is also prevented, so that a stable and homogeneous contact with an electrolyte may be secured according to the design. Thus, the negative electrode material for a secondary battery of the present invention may secure structural integrity to stably implement battery performance.

Specifically, the mechanical properties of the negative electrode material having excellent particle compressive strength include the residual compressive stress of nanoparticulate silicon, and are a physical property value which may be implemented by the residual stress present in the negative electrode material. Here, the residual stress of silicon nanoparticles dispersed and embedded in the matrix included in the negative electrode material may be present in a form of tensile stress, compressive stress, or a mixture of tensile stress and compressive stress, but the compressive stress, which is the main residual stress of the silicon nanoparticles which are included in the negative electrode material according to the present invention and are dispersed and embedded in the matrix, may be uniform according to the crystallographic properties satisfying a ratio ($A_1A_2$) between an area of a first peak ($A_1$) and an area of a second peak ($A_2$) of 0.8 to 6 in the X-ray diffraction pattern described above.

Furthermore, the mechanical strength described above may be further improved by a stress field formed in the matrix surrounding the silicon nanoparticles having the residual compressive stress, by a coherent interface between the silicon nanoparticles and the matrix.

Here, the residual compressive stress of nanoparticulate silicon implementing the mechanical property value of the negative electrode material may be determined by the central wave number of the Raman peak of nanoparticulate silicon based on the central wave number of the Raman peak of bulk monocrystalline silicon, and this will be described in more detail in the Raman characteristics described later.

In an exemplary embodiment according to the present invention, the ratio ($A_1A_2$) between an area of a first peak ($A_1$) and an area of a second peak ($A_2$) may be 0.8 to 8, specifically 0.8 to 6, and more specifically 0.8 to 5.5. Here, the area of each peak in the X-ray diffraction pattern refers to an integral area occupied by each peak. Here, the integral area may be an integral area after fitting the peak having a noise level removed using a Gaussian function and/or a Lorentz function, but when the areas of the first peak and the second peak described above are derived by the same method, the method of deriving the area of XRD peak known in the art may be used without limitation.

As a specific example, noise levels around a peak to be separated are removed using a tool function of a peak analyzer of an Origine program which is a software application, a Gaussian function is applied to separate the peak into two, and then the area of XRD peak described above may be calculated, but the present invention is not limited thereto.

In a specific example, a ratio ($L_1L_2$) between a full width at half maximum of the first peak (FWHM ($L_1$)) and a full width at half maximum of the second peak FWHM ($L_2$) in the X-ray diffraction pattern may be 1 to 20, specifically 3 to 18, more specifically 6 to 15, and still more specifically 6.5 to 13.

In another specific example, an intensity ratio ($I_1/I_2$) between a maximum intensity of the first peak ($I_1$) and a maximum intensity of the second peak ($I_2$) may be 0.05 to 1.25, specifically 0.05 to 1.05, and more specifically 0.08 to 0.75. Here, the first peak may be derived from an amorphous silicon oxide, and the second peak may be derived from crystalline silicon. Since the negative electrode material of a secondary battery including the amorphous silicon oxide may act as a buffer against volume expansion during secondary battery charging, its capacity retention rate may be excellent.

The negative electrode material for a secondary battery according to another exemplary embodiment (II) of the present invention includes: a matrix including a silicon oxide, a composite oxide of silicon and one or more doping elements selected from the group consisting of alkali metals, alkaline earth metals, and post transition metals, or a mixture thereof; and crystalline silicon nanoparticles dispersed and embedded in the matrix, wherein a strength (hardness) by a nanoindentation test is 4.0 GPa or more, a Young's modulus is 40 GPa or more, and a ratio ($A_1/A_2$) between an area of a first peak ($A_1$) and an area of a second peak ($A_2$) satisfies 0.8 to 6, a diffraction angle $2\theta$ being positioned in a range of 10° to 27.4° in the first peak and being positioned in a range of $28\pm0.5°$ in the second peak, in an X-ray diffraction pattern using a CuK$\alpha$ ray.

Hereinafter, all physical properties are those at room temperature (20 to 25°C), unless the temperature is particularly defined regarding the mechanical properties of the negative electrode material for a secondary battery.

Here, the nanoindentation test may be measured in accordance with ASTM E2546, ISO 14577-1 E, ISO 14577-2 E, and ISO 14577-3 E, and an elastic modulus E may be calculated in accordance with the equation $E=E^*\cdot(1-v^2)$, as is known, wherein $E^*$ is an elastic modulus of an indenter, and v is assumed to be 0.3 as a Poisson ratio of a Berkovich indenter. A nanoindentation test using the Berkovich indenter may be performed under the conditions of a maximum load of 50 mN and a load application speed of 100 mN/min. The strength and the elastic modulus measured by the nanoindentation test may be average values of the physical property values obtained by a nanoindentation test in the form of a matrix of $5\times5$ to $25\times25$ having a separation distance between indentation traces of at least 10 $\mu$m or more, based on an indentation trace by an indenter. Here, the negative electrode material sample with which the nanoindentation test is performed may be prepared by mounting a bulk negative electrode material in a plate form and polishing it.

Specifically, the negative electrode material for a secondary battery may have a strength by the nanoindentation test (indentation strength) of 4.0 GPa or more, 4.5 GPa or more, 5.0 GPa or more, 5.5 GPa or more, 6.0 GPa or more, 6.5 GPa or more, 7.0 GPa or more, 7.5 GPa or more, 8.0 GPa or more, 8.5 GPa or more, 9.0 GPa or more, 9.5 GPa or more, 10.0 GPa or more, 10.2 GPa or more, 10.4 GPa or more, 10.6 GPa or more, 10.8 GPa or more, 11.0 GPa or more, 11.2 GPa or more, 11.4 GPa or more, 11.6 GPa or more, 11.8 GPa or more, 12.0 GPa or more, 12.2 GPa or more, 12.4 GPa or more, 12.6 GPa or more, 12.8 GPa or more, or 13.0 GPa or more, and substantially 25.0 GPa or less, more substantially 20.0 GPa or less. Along with this, the negative electrode material for a secondary battery may have an elastic modulus by the nanoindentation test of 40 GPa or more, 41 GPa or more, 42 GPa or more, 43 GPa or more, 44 GPa or more, 45 GPa or more, 50 GPa or more, or 55 GPa or more, substantially 250 GPa or less, more substantially 200 GPa or less.

As described above, the negative electrode material for a secondary battery according to the present invention includes silicon nanoparticles dispersed and embedded in the matrix described above, and shows a high strength of 4.0 GPa or more and an excellent elastic modulus (Young's modulus) of 40 GPa or more, measured by a nanoindentation test, satisfies a ratio $(A_1 A_2)$ between an area of a first peak $(A_1)$ and an area of a second peak $(A_2)$ of 0.8 to 6, a diffraction angle $2\theta$ being positioned in a range of 10° to 27.4° in the first peak and being positioned in a range of $28 \pm 0.5$° in the second peak, in an X-ray diffraction pattern using a CuK$\alpha$ ray, thereby improved mechanical and electrochemical properties, and, has a capacity retention rate at a level of practical commercialization of a secondary battery provided with a silicon-based negative electrode material together with a high discharge capacity.

In addition, since the negative electrode material having high strength and excellent elasticity may prevent physical damage of the particulate negative electrode material during a conventional electrode manufacturing process, in particular, a rolling process, and also may stably maintain the pore structure of the electrode (negative electrode), together with the excellent compressive strength properties of particles, the structural integrity of the negative electrode material for a secondary battery of the present invention may be further improved.

The negative electrode material for a secondary battery according to another exemplary embodiment (III) of the present invention includes: a matrix including a silicon oxide, a composite oxide of silicon and one or more doping elements selected from the group consisting of alkali metals, alkaline earth metals, and post transition metals, or a mixture thereof; and silicon nanoparticles dispersed and embedded in the matrix, wherein a ratio $(A_1/A_2)$ between an area of a first peak $(A_1)$ and an area of a second peak $(A_2)$ satisfies 0.8 to 6, a diffraction angle $2\theta$ being positioned in a range of 10° to 27.4° in the first peak and being positioned in a range of $28 \pm 0.5$° in the second peak, in an X-ray diffraction pattern using a CuK$\alpha$ ray, and the following Equation 1 is satisfied:

$$(Equation\ 1)$$

$$1\ <\ WN(Si)/WN(ref)$$

wherein WN(ref) is a central wave number of a Raman peak of bulk monocrystalline silicon, and WN(Si) is a central wave number of a Raman peak of nanoparticulate silicon included in the negative electrode material.

Here, in Equation 1, a ratio of the Raman peak central wave number of nanoparticulate silicon included in the negative electrode material to the Raman peak central wave number of bulk monocrystalline silicon is a parameter indicating the kind of stress remaining silicon nanoparticles dispersed and embedded in the matrix (residual stress) and the size of the residual stress. In addition, in Equation 1, the term bulk monocrystalline silicon should be interpreted as being substantially silicon having a size showing the physical properties of bulk monocrystalline silicon, and in terms of suggesting clear comparison criteria and ensuring ease of purchase, the bulk monocrystalline silicon may have a thickness in the order of sub millimeters (sub mm order), and as a specific example, may refer to a monocrystalline silicon wafer having a thickness of 0.4 to 0.7 mm.

Specifically, in Equation 1, WN(Si)/WN(ref) being more than 1 means that the central wave number of the Raman peak of nanoparticulate silicon included in the negative electrode material is shifted to a longer wave number (shorter wavelength in the wavelength of Raman scattered light), as compared with the bulk monocrystalline silicon, and this means that nanoparticulate silicon has residual compressive stress.

As described above, the negative electrode material for a secondary battery according to the present invention includes silicon nanoparticles which are dispersed and embedded in the matrix and have residual compressive stress, satisfies a ratio $(A_1 A_2)$ between an area of a first peak $(A_1)$ and an area of a second peak $(A_2)$ of 0.8 to 6, a diffraction angle $2\theta$ being positioned in a range of 10° to 27.4° in the first peak and being positioned in a range of $28 \pm 0.5$° in the second peak, in an X-ray diffraction pattern using a CuK$\alpha$ ray, thereby improved mechanical and electrochemical properties by silicon nanoparticles having uniform residual compressive stress, and, in particular, has a capacity retention rate at a level of practical commercialization of a secondary battery provided with a silicon-based negative electrode material together with a high discharge capacity.

Specifically, the compressive stress, which is the main residual stress of the silicon nanoparticles which are included in the negative electrode material according to the present invention and are dispersed and embedded in the matrix, may be uniform according to the crystallographic properties satisfying a ratio $(A_1 A_2)$ between an area of a first peak $(A_1)$ and an area of a second peak $(A_2)$ of 0.8 to 6 in the X-ray diffraction pattern described above.

In Equation 1, the Raman peak of silicon in each of the bulk monocrystalline silicon and the nanoparticulate silicon may refer to a Raman peak positioned in a region of 500 to 540 cm$^{-1}$, specifically in a region of 510 to 530 cm$^{-1}$, and more specifically in a region of 515 to 528 cm$^{-1}$ in the Raman spectrum of silicon. The central wave number of the peak, that is, the wave number corresponding to the center of the peak, may refer to a wave number having a maximum intensity value. Here, when there are two or more Raman peaks in the Raman shift region, a peak having the highest intensity may correspond to the Raman peak of silicon of Equation 1, and when two or more Raman peaks overlap each other to show a double rod shape, a wave number having a maximum intensity value in a rod having a higher intensity of the two rods may correspond to the central wave number of the peak.

In an exemplary embodiment, when the stress of the silicon nanoparticles is analyzed at 20 random positions different from each other in a specimen (negative electrode material) of 20 mm × 20 mm, the compressive stress may be 80% or more, substantially 85% or more, and more substantially 90% or more, and though the upper limit is not limited, the compressive stress may be substantially 99% or less.

Since a macroscale negative electrode material includes silicon nanoparticles having a residual compressive stress throughout the specimen, a secondary battery provided with a silicon-based negative electrode material may be practically commercialized, due to the significantly improved mechanical and electrochemical properties.

In addition, a difference (WN(Si)-WN(ref)) between WN(Si) and WN(ref) is a parameter directly indicating the size of the residual compressive stress of silicon nanoparticles.

Specifically, the difference between WN(Si) and WN(ref) may be 0.1 cm$^{-1}$ or more, 0.2 cm$^{-1}$ or more, 0.3 cm$^{-1}$ or more, 0.4 cm$^{-1}$ or more, 0.5 cm$^{-1}$ or more, 0.6 cm$^{-1}$ or more, 0.7 cm$^{-1}$ or more, 0.8 cm$^{-1}$ or more, 0.9 cm$^{-1}$ or more, 1.0 cm$^{-1}$ or more, 1.1 cm$^{-1}$ or more, 1.2 cm$^{-1}$ or more, 1.3 cm$^{-1}$ or more, 1.4 cm$^{-1}$ or more, 1.5 cm$^{-1}$ or more, 1.6 cm$^{-1}$ or more, 1.7 cm$^{-1}$ or more, 1.8 cm$^{-1}$ or more, 1.9 cm$^{-1}$ or more, 2.0 cm$^{-1}$ or more, 2.1 cm$^{-1}$ or more, 2.2 cm$^{-1}$ or more, 2.3 cm$^{-1}$ or more, 2.4 cm$^{-1}$ or more, 2.5 cm$^{-1}$ or more, 2.6 cm$^{-1}$ or more, 2.7 cm$^{-1}$ or more, 2.8 cm$^{-1}$ or more, 2.9 cm$^{-1}$ or more, 3.0 cm$^{-1}$ or more, 3.1 cm$^{-1}$ or more, 3.2 cm$^{-1}$ or more, 3.3 cm$^{-1}$ or more, 3.4 cm$^{-1}$ or more, 3.5 cm$^{-1}$ or more, 3.6 cm$^{-1}$ or more, 3.7 cm$^{-1}$ or more, 3.8 cm$^{-1}$ or more, 3.9 cm$^{-1}$ or more, or 4.0 cm$^{-1}$ or more, and substantially 6.0 cm$^{-1}$ or less, more substantially 5.5 cm$^{-1}$ or less.

FWHM of the Raman peak of the nanoparticulate silicon included in the negative electrode material may be larger than FWHM of the Raman peak of the bulk monocrystalline silicon, with or independently of the difference in the central wavelengths of the Raman peak between the bulk monocrystalline silicon and the nanoparticulate silicon included in the negative electrode material described above. The FWHM value larger than that of the bulk monocrystalline silicon may be due to the structure in which silicon included in the negative electrode material is dispersed and embedded in the matrix in an ultra-fine particle form. Specifically, FWHM of the Raman peak of the nanoparticulate silicon included in the negative electrode material may be 4 to 20 cm$^{-1}$, 6 to 20 cm$^{-1}$, 6 to 18 cm$^{-1}$, 6 to 16 cm$^{-1}$, 8 to 20 cm$^{-1}$, 8 to 18 cm$^{-1}$, 8 to 16 cm$^{-1}$, 10 to 20 cm$^{-1}$, 10 to 18 cm$^{-1}$, or 10 to 16 cm$^{-1}$, but is not necessarily limited thereto.

With or independently of the above, the nanoparticulate silicon included in the negative electrode material may have an intensity ($K_1$) at a position of +20 cm$^{-1}$ (wave number) and an intensity ($K_2$) at a position (wave number) of -20 cm$^{-1}$ in a Raman spectrum which are significantly different from each other, in which the intensity ($K_2$) at a position (wave number) of -20 cm$^{-1}$ may be larger than the intensity ($K_1$) at a position of +20 cm-1 (wave number), based on the central wave number of the Raman peak of silicon (0 cm$^{-1}$). Here, "being significantly different" means that a ratio of $K_2/K_1$ is 1.20 or more. The asymmetry (long tail in a short wavelength direction) of the silicon Raman peak as such may be also due to the structure in which silicon nanoparticles having residual compressive stress are dispersed and embedded in the matrix.

Along with this, in the two-dimensional mapping analysis of the negative electrode material based on the silicon Raman signal, a difference between a maximum value and a minimum value of shift as defined by the following Equation 2 may be 5 cm$^{-1}$ or less:

$$\text{(Equation 2)}$$

$$\text{Shift} = WN^i(Si) - WN(ref)$$

wherein WN(ref) is as defined in Equation 1, and WN$^i$(Si) is a central wave number of a Raman peak of nanoparticulate silicon included in the negative electrode material in one pixel which is a unit analysis area in a mapping analysis. Here, in Equation 2, a shift according to Equation 2 may be calculated in each pixel of only pixels from which Raman signals have been detected, in the two-dimensional Raman map obtained by the two-dimensional mapping analysis, and the maximum value and the minimum value thereof refer to the maximum value and the minimum value of the shifts calculated according to Equation 2, of course.

A difference between the maximum value and the minimum value of the central wave number shift value (shift) of a silicon peak as compared with that of the bulk monocrystalline silicon according to Equation 2, based on the two-dimensional Raman map of silicon obtained by the two-dimensional mapping analysis of the negative electrode material based on the silicon Raman signal is an indicator showing residual compressive stress uniformity of silicon nanoparticles dispersed and embedded in the negative electrode material. The difference between the maximum value and the minimum value of the shifts based on the two-dimensional Raman map may satisfy 5.0 cm$^{-1}$ or less, 4.5 cm$^{-1}$ or less, 4.0 cm$^{-1}$ or less, 3.5 cm$^{-1}$ or less, 3.0 cm$^{-1}$ or less, 2.5 cm$^{-1}$ or less, or 1.0 cm$^{-1}$ or less, and the difference between the maximum value and the minimum value may substantially satisfy 0.1 cm$^{-1}$ or more, and more substantially 0.5 cm$^{-1}$ or more. The difference between the maximum value and the minimum value as such means that most of silicon nanoparticles, substantially all silicon nanoparticles included in the negative electrode material have residual compressive stress, and furthermore, means that the size of the compressive stress remaining in most of silicon nanoparticles, substantially all silicon nanoparticles included in the negative electrode material is substantially almost the same.

Experimentally, the Raman spectrum of silicon included in the negative electrode material may be measured under the conditions of an excitation laser wavelength of 532 nm, a laser power of 0.5 mW, a resolution of a spectrometer of 1 cm$^{-1}$, 1 g of the negative electrode material, and an exposure time of 15 s, at room temperature (20 to 25°C) under atmospheric pressure.

Experimentally, the two-dimensional Raman mapping of the negative electrode material using a silicon Raman signal may be measured under the mapping conditions of excitation laser wavelength = 532 nm, laser power = 0.1 mW, detector exposure time (exposure time per unit analysis area) = 1 sec, focal length = 30 mm, grating = 1800 grooves/mm, pixel resolution = 1 cm$^{-1}$, mapping size = 14 $\mu$m $\times$ 14 $\mu$m, at room temperature under atmospheric pressure.

As a specific example, in the shift analysis based on the silicon Raman signal at 20 random positions different from each other in a specimen of 20 mm $\times$ 20 mm, the difference between the maximum value and the minimum value of the shifts defined by the following Equation 2 may satisfy 5.0 cm$^{-1}$ or less, 4.5 cm$^{-1}$ or less, 4.0cm$^{-1}$ or less, 3.5 cm$^{-1}$ or less, 3.0 cm$^{-1}$ or less, 2.5 cm$^{-1}$ or less, or 1.0 cm$^{-1}$ or less, and the difference between the maximum value and the minimum value may substantially satisfy 0.1 cm$^{-1}$ or more, and more substantially 0.5 cm$^{-1}$ or more. This means that the compressive stress sizes remaining in all silicon nanoparticles included in the entire specimen, that is, substantially the entire specimen, as well as the mapping area are substantially almost the same.

Here, the Raman spectrum and the two-dimensional Raman mapping used in the shift analysis may be measured under the same conditions described above.

The negative electrode material for a secondary battery according to another exemplary embodiment (IV) of the present invention includes: a matrix including silicon (Si), one or more doping elements (D) selected from the group consisting of alkali metals, alkaline earth metals, and post transition metals, based on the element component, and oxygen (O); and silicon nanoparticles dispersed and embedded in the matrix, wherein the negative electrode material has composition uniformity satisfying the following Equation 3, and a ratio ($A_1A_2$) between an area of a first peak ($A_1$) and an area of a second peak ($A_2$) is 0.8 to 6, a diffraction angle $2\theta$ being positioned in a range of 10° to 27.4° in the first peak and being positioned in a range of 28$\pm$0.5° in the second peak, in an X-ray diffraction pattern using a CuK$\alpha$ ray.

$$(\text{Equation } 3)$$

$$B/A \leq 0.65$$

wherein A and B are an average value (A) obtained by averaging the contents (wt%) of doping elements measured at any 100 points, based on a cross section across the center of the negative electrode material, and a standard deviation (B) thereof. Specifically, A and B may be an average content (wt%, A) of doping elements calculated from any 100 points in a line profile of the doping elements across the center of the cross section of the negative electrode material, and the standard deviation (B) thereof.

More specifically, B/A of Equation 3 may satisfy 0.65 or less, 0.60 or less, 0.55 or less, 0.50 or less, 0.40 or less, or 0.30 or less and 0.2 or more.

In Equation 3, B/A is a parameter showing the composition uniformity of the negative electrode material based on the doping element (D), and the negative electrode material may show uniform mechanical and electrochemical properties by the excellent composition uniformity of B/A satisfying the range described above.

In addition, in an exemplary embodiment, the negative electrode material including a plurality of negative electrode material particles may have the composition uniformity between particles according to the following Equation 4:

$$(\text{Equation } 4)$$

$$1.3 \leq UF(D)$$

wherein UF(D) is a value obtained by dividing an average doping element composition between negative electrode material particles by a standard deviation of a doping element composition, based on wt% composition. Here, the number of a plurality of negative electrode material particles may be 10 to 500, substantially 50 to 300, and more substantially 100 to 200.

Specifically, in Equation 4, UF(D) may satisfy 1.3 or more, 1.5 or more, 2 or more, 2.5 or more, 3 or more, or 5 or more, and substantially 8 or less. The UF(D) described above is a parameter showing composition uniformity between negative electrode material particles in the negative electrode material including a plurality of negative electrode material particles, and since the UF(D) of Equation 4 satisfies the range described above, the negative electrode material including a plurality of negative electrode material particles has excellent composition uniformity, and thus, even when a plurality of negative electrode material particles are included, the mechanical and electrochemical properties of the negative electrode material may be shown to be uniform.

Experimentally, the analysis of the content or line composition of the doping elements may be performed using an electron probe micro analyzer (EPMA), an energy dispersive X-ray spectroscopy (EDS) provided in a transmission electron microscope, a scanning electron microscope, and the like, but is not limited thereto.

In the negative electrode material for a secondary battery satisfying the composition uniformity described above, a matrix based on the element component may include one or more doping elements (D) selected from the group consisting of alkali metals and alkaline earth metals, silicon (Si), and oxygen (O), and a matrix based on a compound component may include a silicon oxide and a composite oxide of a doping element and silicon. Thus, the composition uniformity of the doping element defined by Equation 3 may correspond to the composition uniformity of the composite oxide, but is not interpreted as being necessarily limited thereto.

The negative electrode material for a secondary battery according to another exemplary embodiment (V) of the present invention includes: a matrix including a silicon oxide, a composite oxide of silicon and one or more doping elements selected from the group consisting of alkali metals, alkaline earth metals and post transition metals, or a mixture thereof; and silicon nanoparticles dispersed and embedded in the matrix, wherein a volume change during charging to 0.005 V is 20% or less, and a ratio $(A_1A_2)$ between an area of a first peak $(A_1)$ and an area of a second peak $(A_2)$ is 0.8 to 6, a diffraction angle $2\theta$ being positioned in a range of 10° to 27.4° in the first peak and being positioned in a range of $28 \pm 0.5°$ in the second peak, in an X-ray diffraction pattern using a CuK$\alpha$ ray.

Here, the volume change (%) is a volume change of a negative electrode including the negative electrode material and may be defined as [negative electrode volume after lithiation - negative electrode volume before lithiation] / negative electrode volume before lithiation * 100, and the volume change of 20% or less, specifically 19% or less, 18% or less, 17% or less, 16% or less, or only 15% or less during charging to 0.005 V means that a significantly small volume change occurs as compared with a conventional silicon-based negative electrode material, and the main problem of the conventional silicon-based negative electrode material has been greatly solved.

The charging of the negative electrode material may be performed by the charge/discharge test according to the following charge/discharge cycle conditions using a half battery having a negative electrode including the negative electrode material and a counter electrode being a metal lithium foil, and the charging may be done to 0.005 V in the charge/discharge cycle, specifically the first charge/discharge cycle.

Charge/discharge cycle conditions: CC/CV, Cut-off voltage 0.005 V-1.0 V, 0.5C-rate

Hereinafter, unless otherwise separately defined and presented, the electrochemical properties (charge/-discharge properties, discharge capacity, dQ/dV graph, etc.) of the negative electrode material including the volume change during the lithiation described above may be the electrochemical properties of a half battery having a negative electrode including the negative electrode material and a counter electrode being a metal lithium foil, and the electrochemical properties of a half battery in which a formation process has been performed. The half battery may be a cell including a negative electrode including a negative electrode current collector and a negative electrode active material layer including the negative electrode material according to an exemplary embodiment of the present invention disposed on at least one surface of the current collector; a counter electrode which is a metal lithium foil; a separator interposed between the negative electrode and the counter electrode; and an electrolyte in which $LiPF_6$ is dissolved at a concentration of 1 M in a mixed solvent of ethylene carbonate and diethyl carbonate at a volume ratio of 1:1 , and the electrochemical properties of the half battery may be measured at room temperature. A formation process may include a first process of performing charging and discharging under the conditions of CC/CV, Cut-off voltage 0.005 V-1.5 V, and 0.1 C-rate and a second process of performing charging and discharging under the conditions of CC/CV, Cut-off voltage 0.005 V-1.0 V, and 0.1 C-rate, but the present invention is not limited to the formation process conditions of a test battery (half battery), of course, and it may be only a formation process which is commonly performed in a battery used for conventionally testing the electrochemical properties of a negative electrode material.

The negative electrode material for a secondary battery according to another exemplary embodiment (VI) of the present invention includes: a matrix including a silicon oxide, a composite oxide of silicon and one or more doping elements selected from the group consisting of alkali metals, alkaline earth metals, and post transition metals, or a mixture thereof; and silicon nanoparticles dispersed and embedded in the matrix, wherein in a dQ/dV graph obtained by a charge/-discharge test depending on the charge/discharge cycle conditions using a half battery having a counter electrode being a metal lithium foil, there is a lithium insertion peak corresponding to a $Li_{3.75}Si$ reaction, a discharge capacity in the first charge/discharge cycle is 1200 mAh/g or more, and a ratio $(A_1/A_2)$ between an area of a first peak $(A_1)$ and an area of a second peak $(A_2)$ is 0.8 to 6, a diffraction angle $2\theta$ being positioned in a range of 10° to 27.4° in the first peak and being positioned in a range of 28±0.5° in the second peak, in an X-ray diffraction pattern using a CuKα ray.

Charge/discharge cycle conditions: CC/CV, Cut-off voltage 0.005V-1.0V, 0.5C-rate

The dQ/dV graph may be a graph showing a relationship between a differential value dQ/dV and a potential V, dQ/dV being obtained by differentiating a battery capacity (discharge capacity) Q by the potential V of a negative electrode based on the metal lithium foil of the half battery in the first charge/discharge cycle. Here, the lithium insertion peak corresponding to the $Li_{3.75}Si$ reaction on the dQ/dV graph may refer to a peak positioned in a voltage range of 0.005 V to 0.100 V, specifically a voltage range of 0.005 V to 0.050 V, and more specifically a voltage range of 0.005 V to 0.040 V.

That is, the negative electrode material for a secondary battery according to another exemplary embodiment (VI) of the present invention means that lithium insertion goes beyond $Li_{3.5}Si$ to $Li_{3.75}Si$. Since the lithium insertion is performed to $Li_{3.75}Si$, the capacity of the negative electrode material may be improved. As a substantial example, during charging and discharging according to the cycle conditions of a formation process half battery, a formation first process discharge capacity (F1) may be 1200 mAh/g or more, 1250 mAh/g or more, 1300 mAh/g or more, 1350 mAh/g or more, 1400 mAh/g or more, or 1500 mAh/g or more and substantially 2500 mAh/g or less.

The negative electrode material for a secondary battery according to another exemplary embodiment (VII) of the present invention includes: a matrix including a silicon oxide, a composite oxide of silicon and one or more doping elements selected from the group consisting of alkali metals, alkaline earth metals, and post transition metals, or a mixture thereof; and silicon nanoparticles dispersed and embedded in the matrix, wherein when charge and discharge according to the following charge/discharge cycle conditions using a half battery having a counter electrode being a metal lithium foil are tested, Equation 4 is satisfied, and a ratio ($A_1A_2$) between an area of a first peak (A1) and an area of a second peak ($A_2$) satisfies 0.8 to 6, a diffraction angle 2θ being positioned in a range of 10° to 27.4° in the first peak and being positioned in a range of 28±0.5° in the second peak, in an X-ray diffraction pattern using a CuKα ray:

Charge/discharge cycle conditions: CC/CV, Cut-off voltage 0.005V-1.0V, 0.5C-rate

$$\text{(Equation 5)}$$

$$95\% \leq C50/C1*100$$

wherein C1 is a discharge capacity (mAh/g) of a negative electrode material in the first charge/discharge cycle, and C50 is a discharge capacity of a negative electrode material in the 50th charge/discharge cycle. Here, C1 in the first charge/-discharge cycle may be a discharge capacity of a negative electrode material measured after the formation process is performed once and/or twice.

Specifically, C50/C1*100 may be 95% or more, 96% or more, 97% or more, 98% or more, or 99% or more. The cycle characteristics as such means that the storage and discharge of a lithium ion in the negative electrode material are substantially completely reversible, a capacity degradation (deterioration of the negative electrode material, reduced electrical contact of the negative electrode material in the negative electrode active material layer, formation of an irreversible product, etc.) does not occur substantially in the charge/discharge process repeated up to 50 times, and the capacity retention rate is extremely excellent.

In a specific example, C50 may be 1150 mAh/g or more, 1200 mAh/g or more, 1250 mAh/g or more, 1300 mAh/g or more, 1350 mAh/g or more, or 1450 mAh/g or more and substantially 2450 mAh/g or less.

The negative electrode material for a secondary battery according to another exemplary embodiment (VIII) of the present invention includes: a matrix including a silicon oxide, a composite oxide of silicon and one or more doping elements selected from the group consisting of alkali metals, alkaline earth metals, and post transition metals, or a mixture thereof; and silicon nanoparticles having residual compressive stress dispersed and embedded in the matrix.

The residual compressive stress of the nanoparticulate silicon dispersed and embedded in the matrix, and furthermore, a stress field formed in the matrix around silicon nanoparticles by a coherent interface formed between silicon nanoparticles and the matrix and the residual compressive stress of silicon may be shown as the physical properties or measurable parameter of the negative electrode material, as an exemplary embodiment of the negative electrode material based on the Raman spectrum, another exemplary embodiment of the negative electrode material based on the mechanical properties, or another exemplary embodiment of the negative electrode material based on the electrochemical properties in lithiation.

The negative electrode material in the present invention may satisfy one or more exemplary embodiments, two or more exemplary embodiments, three or more exemplary embodiments, four or more exemplary embodiments, five or more exemplary embodiments, six or more exemplary embodiments, seven or more exemplary embodiments, or all of the exemplary embodiments (I to VIII) described above.

Hereinafter, otherwise particularly limited to "an exemplary embodiment according to the present invention" and stated, the following description corresponds to each of all exemplary embodiments provided in the present invention.

In a specific example, the negative electrode material may include one or more doping elements selected from the group consisting of silicon, oxygen, alkali metals, alkaline earth metals, and post transition metals, based on the element component. Silicon may include a silicon component in an elemental silicon state and a silicon component in an oxide state, and the silicon component in an oxide state may include an oxide state of silicon alone, a composite oxide state of silicon and a doping element, or both of them. The doping element may include a doping element component in an oxide state, and the doping element in an oxide state may include an oxide state of a doping element alone, a composite oxide state of silicon and a doping element, or both of them.

The negative electrode material may include a silicon oxide, a composite oxide of a doping element and a silicon, or a mixture thereof, based on the compound component, and elemental silicon (Si) may be also included therewith. The silicon oxide is $SiO_x$ wherein x includes a real number of 0.1 to 2, the composite oxide is $D_lSi_mO_n$ wherein D is a doping element, l is a real number of 1 to 6, and m is a real number of 0.5 to 2, and n is a real number satisfying charge neutrality depending on the oxidation number of each of D and Si, l, and m. As an example, when D is Mg, the composite oxide may include one or more oxides selected from $MgSiO_3$, $Mg_2SiO_4$, and the like, but in the present invention, D and the composite oxide are not necessarily limited to an oxide between Mg and Mg-Si.

The negative electrode material based on a microstructure may include a dispersed phase including a matrix including a silicon oxide; a composite oxide of silicon and one or more doping elements selected from the group consisting of alkali metals and alkaline earth metals; or a mixture thereof, and silicon nanoparticles. The dispersed phase may be positioned in the state of being uniformly dispersed and embedded in the matrix.

According to the invention, the silicon nanoparticles are crystalline.

In a specific example, the matrix may be crystalline, amorphous, or a composite phase in which crystalline and amorphous matrices are mixed. Specifically, the matrix may be crystalline or a composite phase in which crystalline and amorphous are mixed. Specifically, the matrix may include a silicon oxide which is amorphous, crystalline, or a mixture of amorphous and crystalline silicon oxide, and a crystalline composite oxide.

The interface between the silicon nanoparticles and the matrix may include a coherent interface, an incoherent interface, or a semi-coherent interface, substantially a coherent interface or a semi-coherent interface, and more substantially, a coherent interface. As is known, the coherent interface is an interface in which the lattice continuity of the lattice of two materials forming the interface is maintained, and the semi-coherent interface is an interface in which there is a lattice mismatch portion is partially present, but the lattice mismatch portion may be regarded as a defect such as potential. Thus, in the negative electrode material having a coherent or semi-coherent interface between silicon nanoparticles and the matrix, the matrix region in contact with the silicon nanoparticles may be crystalline, and specifically, may be a crystalline silicon oxide, a crystalline composite oxide, or a mixture thereof. Experimentally, the interfacial structure of a coherent interface, an incoherent interface, and a semi-coherent interface may be determined by high magnification scanning electron microscope observation and the like, which is well known to a person skilled in the art.

In a specific example, the silicon nanoparticles may have an average diameter in the order of $10^0$ nm to $10^1$ nm, specifically 1 to 50 nm, 2 to 40 nm, 2 to 35 nm, 2 nm to 30 nm, 2 nm to 20 nm, or 2 nm to 15 nm, but is not limited thereto. However, the silicon nanoparticles at a level of 30 nm or less form a coherent interface with the matrix as a whole, and stress is formed in a large area of the matrix by compressive stress remaining in the silicon nanoparticles, which is thus advantageous. Experimentally, the average diameter of the silicon nanoparticles may be calculated by measuring the size of the silicon nanoparticles in the negative electrode material by an image observed by a transmission electron microscope, and averaging the size measured for 10 or more, 20 or more, or 30 or more silicon nanoparticles.

In a specific example, the doping element may be one or more selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). Thus, the composite oxide may be an oxide of silicon with one or more elements selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi). The mechanical properties and the electrochemical properties of the negative electrode material may be further improved by the synergistic effect between the composite oxide and the silicon nanoparticles having residual compressive stress. The doping element may be alkali metal and alkaline earth metal groups, specifically, may be one or more elements selected from lithium (Li), sodium (Na), potassium (K), rubidium (Rb), cesium (Cs), beryllium (Be), magnesium (Mg), calcium (Ca), strontium (Sr), and barium (Ba), and more advantageously, one or more elements selected from alkaline earth metals, specifically, magnesium (Mg), calcium (Ca), strontium (Sr), and barium (Ba), so as to favor the formation of the coherent interface with the silicon nanoparticles. Most advantageously, in terms of easy coherent interface formation and the synergistic effect with the silicon nanoparticles having residual compressive stress, the doping element may include magnesium. As described above, the doping element may be included in the negative electrode material in a composite oxide form with silicon and/or an oxide form of the doping element, and may be included in the negative electrode material mainly in the composite oxide form. Specifically, when the matrix includes the doping element in the composite oxide form with silicon, the composite oxide may include a crystalline form, and more substantially, the composite oxide may be crystalline. Thus, the matrix may include a crystalline composite oxide.

In a specific example, the silicon oxide included in the matrix may be $SiO_x$ wherein x is a real number of 0.1 to 2, more specifically a real number of 0.5 to 2, and may include a first silicon oxide and a second silicon oxide having different x's from each other. As a substantial example, the silicon oxide included in the matrix may include a first silicon oxide of $SiO_{x1}$ (x1 is a real number of 1.8 to 2) and a second silicon oxide of $SiO_{x2}$ (x2 is a real number of 0.8 to 1.2). The silicon oxide included in the matrix may be crystalline, amorphous, or a composite phase of crystalline and amorphous silicon oxide, and substantially may be amorphous.

In a specific example, the negative electrode material may include 15 to 50 wt% of the nanoparticulate silicon and a balance of matrix.

In a specific example, the matrix of the negative electrode material may include both the silicon oxide and the composite oxide, and when the part by weight of the composite oxide based on 100 parts by weight of the silicon oxide is A, and the concentration of the doping element based on wt% in the negative electrode material is B, the matrix may satisfy A/B of 2 to 50, 2 to 40, 2 to 30, or 2 to 20.

In a specific example, the negative electrode material may be in a particle form. The particulate negative electrode material may have a particle size usually required in the use of a secondary battery, and as an example, may have an average diameter in the order of $10^0$ μm to $10^1$ μm, specifically, an average diameter at a level of 5 μm to 30 μm, but is not limited thereto.

In a specific example, the negative electrode material may further include a coating layer containing carbon, specifically, a surface coating layer coated on the surface of the negative electrode material. The electrochemical properties of the negative electrode material may be improved by the surface coating layer, which is thus preferred. The thickness of the coating layer may be 2 to 30 nm, but is not necessarily limited thereto.

In a specific example, the negative electrode material includes silicon nanoparticles having residual compressive stress, and may have an alloying ratio of (more than) 3.5 mol to 3.75 mol of lithium, specifically 3.6 to 3.75 mol of lithium per 1 mol of silicon in the electrochemical alloying with lithium (lithiation). The high alloying ratio as such is very advantageous for a high capacity. In addition, in a specific example, the negative electrode material may have high initial charge/discharge efficiency and a capacity retention rate properties.

The present invention includes a negative electrode including the negative electrode material described above. The negative electrode may be a negative electrode of a secondary battery, specifically, a lithium secondary battery. The negative electrode may include a current collector; and a negative electrode active material layer including the negative electrode material described above, disposed on at least one surface of the current collector, and the negative electrode active material layer may further include a binder and a conductive material which are commonly used in the negative electrode material and a secondary battery negative electrode.

The present invention includes a secondary battery including the negative electrode described above. Specifically, the present invention includes a lithium secondary battery including the negative electrode described above. The lithium secondary battery may include a positive electrode including a positive electrode current collector and a positive electrode active material layer disposed on at least one surface of the positive electrode current collector; the negative electrode described above; a separator interposed between the positive electrode and the negative electrode; and an electrolyte conducting a lithium ion. The positive electrode current collector, the negative electrode current collector, the positive electrode active material or composition of the positive electrode active material layer, the solvent, the electrolyte salt, or the concentration of the electrolyte salt of the separator and the electrolyte, and the like may be a material or a composition commonly adopted in a lithium secondary battery.

(Example 1)

Si, $SiO_2$, and MgO raw materials were put into a powder mixer at a mole ratio of 6 (Si) :4.5 ($SiO_2$) :1.5 (MgO), respectively, and then homogeneously mixed to prepare a mixed raw material, and the mixed raw material was pelletized using a mold.

26 kg of the pelletized mixed raw material was added to a crucible in a vacuum chamber at 0.1 torr or less, heated to 1,400°C to be vaporized, and then condensed in a collecting plate at 400°C to obtain a magnesium-doped silicon oxide.

The obtained magnesium-doped silicon oxide was heat-treated in an Ar atmosphere at 850°C for 20 hours to prepare a negative electrode material for a secondary battery in a bulk form.

The thus-prepared bulk-type negative electrode material for a secondary battery was mechanically crushed to an average particle diameter of 5 μm to prepare a particulate negative electrode material, and a hydrocarbon gas was used to coat the particulate negative electrode material with 5 wt% of carbon by a CVD process at 850°C to prepare carbon-coated negative electrode material powder.

(Example 2)

The process was performed in the same manner as in Example 1, except that each raw material was mixed at a mole ratio of 6.5 (Si) :4.5 ($SiO_2$):0.5 (MgO).

(Example 3)

The process was performed in the same manner as in Example 1, except that each raw material was mixed at a mole ratio of 6.5 (Si) :4.5 ($SiO_2$).

(Comparative Example 1)

Si, $SiO_2$, and MgO raw materials were put into a powder mixer at a mole ratio of 6 (Si) :4.5 ($SiO_2$):1.5 (MgO), respectively, and then homogeneously mixed to prepare a raw material.
26 kg of the raw material was added to a crucible in a vacuum chamber at 0.1 torr or less, heated to 1,400°C to be vaporized, and then condensed in a collecting plate at 400°C to obtain a magnesium-doped silicon oxide. The thus-obtained magnesium-doped silicon oxide (bulk-type negative electrode material for a secondary battery) was mechanically crushed to an average particle diameter of 5 $\mu$m to prepare a particulate negative electrode material, and a hydrocarbon gas was used to coat the particulate negative electrode material with 5 wt% of carbon by a CVD process at 850°C to prepare carbon-coated negative electrode material powder.

(Comparative Example 2)

24 kg of a mixed raw material of Si and $SiO_2$ was added to crucible A, 2 kg of a lump of metal Mg was added to crucible B, crucible A was heated to 1,500°C and crucible B was heated to 900°C, respectively to vaporize the raw materials, which were condensed in a collecting plate at 900°C to obtain a magnesium-doped silicon oxide.
The thus-obtained magnesium-doped silicon oxide (bulk-type negative electrode material for a secondary battery) was mechanically crushed to an average particle diameter of 5 $\mu$m to prepare a particulate negative electrode material, and a hydrocarbon gas was used to coat the particulate negative electrode material with 5 wt% of carbon by a CVD process at 850°C to prepare carbon-coated negative electrode material powder.

(Comparative Example 3)

The process was performed in the same manner as in Example 1, except that only a Si raw material was used, and heating was performed at 2200°C.

(Experimental Example 1) Doping element content deviation

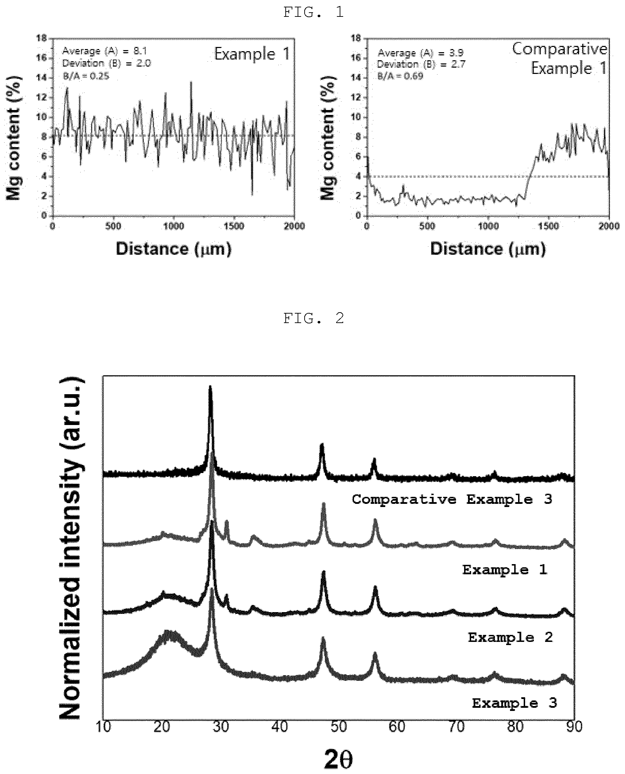

An average content (wt%) of a doping element calculated by measuring any 100 points in the line composition across the center of the cross section by electron disperse spectroscopy (EDS), based on the cross section across the center of the magnesium-doped silicon oxide (Comparative Example 2) or the bulk-type negative electrode material for a secondary battery (Example 1) obtained by a heat treatment before crushing was calculated as A, and the standard deviation of the content was calculated as B, which are shown in FIG. 1. As a result of a composition analysis, B/A of the negative electrode material sample prepared in Example 1 was 0.25, and B/A of Comparative Example 2 was 0.69.
Further, after crushing the negative electrode material of Example 1, 150 negative electrode material particles were sampled, and then the composition uniformity of the doping element included between the negative electrode material particles was analyzed. At this time, UF(D) which is a value obtained by an average doping element composition (wt%) between negative electrode material particles by the standard deviation of the doping element composition was confirmed to be 6.2.
(Experimental Example 2) X-ray diffraction (XRD) analysis
The structure of the negative electrode material after crushing was confirmed by an X-ray diffraction (XRD, Rigaku D/MAX-2500/PC, 40 kV, 15 mA, 4° min$^{-1}$, Cu-K$\alpha$ radiation, $\lambda$ = 0.15406 nm) analysis.
FIG. 2 is a drawing illustrating XRD patterns of Examples 1 to 3 and Comparative Example 3, and as seen in the drawing, it was confirmed that the peak of crystalline silicon (111) was observed at about 28° in all of Examples 1 to 3 and Comparative Example 3, and the peaks in which a diffraction angle $2\theta$ of Examples 1 to 3 was positioned in a range of 10° to 27.4° appeared broadly, but there was no peak in which the diffraction angle $2\theta$ of Comparative Example 3 was positioned in a range of 10° to 27.4°. It was found therefrom that Examples 1 to 3 included an amorphous silicon oxide, Comparative Example 3 did not include an amorphous silicon oxide, and thus, since Examples 1 to 3 including the amorphous silicon oxide may act as a buffer against volume expansion during charging of a secondary battery, it may be advantageous in terms of the capacity retention rate of a secondary battery.
Furthermore, upon comparison of the ratio ($A_1/A_2$) between an area of the first peak ($A_1$) in which a diffraction

angle $2\theta$ is positioned at a range of 10° to 27.4° and an area of the second peak ($A_2$) in which a diffraction angle $2\theta$ is positioned at a range of $28 \pm 0.5°$, in the X-ray diffraction pattern, Examples 1 to 3 were confirmed to be in a range of 0.8 to 6.

Further, upon comparison of the intensity ratio ($I_1/I_2$) between the maximum intensity of the first peak ($I_1$) in which a diffraction angle $2\theta$ is positioned at a range of 10° to 27.4° and the maximum intensity of the second peak ($I_2$) in which a diffraction angle $2\theta$ is positioned at a range of $28 \pm 0.5°$, in the X-ray diffraction pattern, it was confirmed that Examples 1 to 3 were in a range of 0.1 to 1.25, and as a result of comparison and analysis of the ratio ($L_1/L_2$) between FWHM ($L_1$) of the first peak and FWHM ($L_2$) of the second peak, it was confirmed that Examples 1 to 3 were in a range of 6 to 12.

(Experimental Example 3) Raman analysis

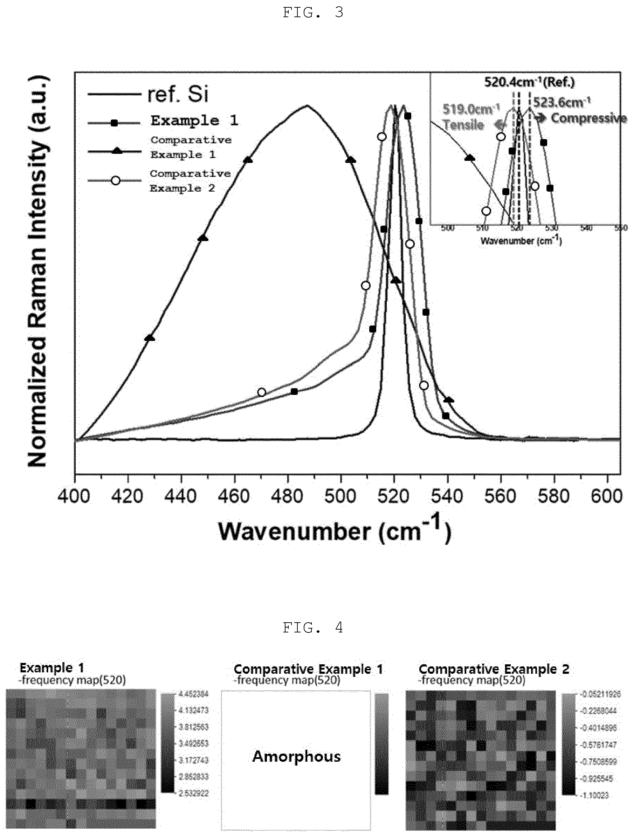

As a $\mu$-Raman analysis (equipment name: XperRam C, Nanobase, Korea) of the negative electrode material after crushing, the Raman analysis was performed under the following conditions based on the silicon Raman signal. The Raman signal of the negative electrode material powder is shown in FIG. 3. As shown in FIG. 3, the silicon Raman signal (peak center) of the negative electrode material prepared in Example 1 was 523.6 cm$^{-1}$, from which it was found that the negative electrode material had residual compressive stress, and it was found that the negative electrode materials prepared in the comparative examples had residual tensile stress. In addition, as a result of measuring FWHM of the silicon Raman signal prepared in Example 1, FWHM was 12 cm$^{-1}$, which was confirmed to be higher than the FWHM of the monocrystalline silicon Raman signal (C-Si (ref) of the figure).

Analysis conditions: excitation laser wavelength: 532 nm, laser power: 0.5 mW, resolution of spectrometer: 1 cm$^{-1}$, powdery negative electrode material: 1 g, detector exposure time: 15 s

Stress remaining silicon was calculated using the Raman measurement results and the following equation, and the silicon residual stress in the particulate negative electrode material and the silicon residual stress in the bulk-type negative electrode material are summarized in Table 1. As shown in Table 1 with the results of the comparative examples, the negative electrode material prepared in Example 1 had a residual compressive stress of 0.74 GPa when silicon was in a bulk form, and 0.29 GPa when silicon is in a particle form, and it was found that amorphous phase Si in Comparative Example 1 and Si in Comparative Example 2 had tensile stress, not compressive stress.

$$\sigma(MPa) = -500 \times \Delta\omega(cm^{-1})$$

Here, $\sigma$ is residual stress, and $\Delta\omega$ is a difference between the Raman signal of the measured sample and the Raman signal of monocrystalline silicon (Si (ref) in FIG. 3, 520.4 cm$^{-1}$) (= the wave number of the measured silicon Raman signal - the wave number of the monocrystalline silicon Raman signal), in which when $\Delta\omega$ is a positive value, the stress is compressive stress, and when $\Delta\omega$ is a negative value, the stress is tensile stress.

By a $\mu$-Raman analysis (equipment name: XperRam C, Nanobase, Korea) of the magnesium-doped silicon oxide (Comparative Example 1) and the bulk-type negative electrode material for a secondary battery (Example 1) obtained by a heat treatment before crushing, the two-dimensional mapping analysis based on the silicon Raman signal was performed under the following conditions, and the mapping results are shown in FIG. 4. In the case of the negative electrode material prepared in Example 1, the silicon Raman peak was detected in all pixels, and as a results of measuring shift per pixel = Wn$^i$(Si)-WN(ref), the shift range was confirmed to be 2.86 (minimum value) to 4.58 (maximum value).

Mapping conditions: excitation laser wavelength = 532 nm, laser power = 0.1 mW, detector exposure time (exposure time per unit analysis area) = 1 sec, focal length = 30 mm, grating = 1800 grooves/mm, pixel resolution = 1cm$^{-1}$, mapping size = 14 $\mu$m $\times$ 14 $\mu$m

Further, as a result of a shift analysis based on the silicon Raman signal under the above conditions at randomly selected 20 positions different from each other in the negative electrode material before crushing having a size of 20 mm $\times$ 20 mm, the shift range measured at different positions was confirmed to be 2.42 (minimum value) to 4.86 (maximum value). In addition, in the analysis of stress of silicon nanoparticles at 20 random positions different from each other, the silicon nanoparticles were confirmed to have a compressive stress in a range of 88 to 99%.

(Experimental Example 4) Mechanical properties

For measuring particle strength, compressive strength was measured using a micro compression tester, MCT-W manufactured by Shimadzu Corporation). Particle strength was measured for 10 arbitrary particles having a diameter of 10 $\mu$m, and the average values of the measurement results are summarized in Table 1.

The micro compression tester is uniaxial compression test equipment to which force is applied in a vertical direction of particles, and evaluation was performed by constantly applying a load of 100 mN at 3.8 mN/sec. The compression test was performed at room temperature without a change in other conditions except for pressure. At this time, pressure at which particles are broken is determined as particle strength, and is automatically measured in the compression test. A time of breakage may be confirmed visually by a microscope built into the micro compression tester together with a change in the slope of the strength in measurement.

Further, a nanoindentation test device (Anton Paar, Austria) was used to perform the test for the cross sections of the magnesium-doped silicon oxide (Comparative Example 1) the bulk-type negative electrode material for a secondary battery (Example 1) obtained by a heat treatment before crushing.

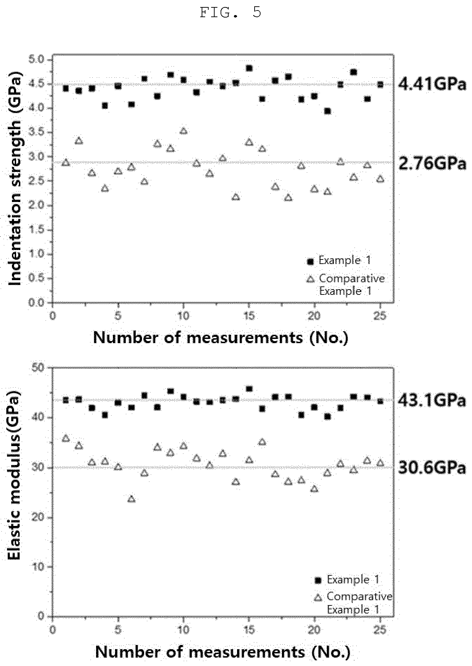

The nanoindentation test (Indenter) followed the measurement standards of ISO 14577-1 E, and the measurement conditions were assumed to be 0.3 as a Poisson ratio using a Berkovich indenter, and performed at a maximum load of 50 mN and a load application speed of 100 mN/min. At this time, a separation distance between indentation traces based on the indentation trace by the indenter was at least 10 um or more, the test was performed in a matrix form of 5×5 to 25×25, and the strength and the elastic coefficient calculated therefrom are shown in FIG. 5.

As shown in FIG. 5, it was confirmed that the average value of the strength by the nanoindentation test of Example 1 was 4.41 GPa, and the average value of the elastic modulus was 43.1 GPa, and the average value of the strength by the nanoindentation test and the average value of the elastic modulus of Comparative Example 1 were confirmed to be 2.76 GPa and 30.6 GPa, respectively, and as a result of the nanoindentation test, the strength of Example 1 was about 1.6 times, the elastic modulus of Example 1 was about 1.4 times those of Comparative Example 1, and thus, it was found that the mechanical properties of Example 1 were significantly improved.

(Experimental Example 5) Battery manufacture and battery performance evaluation

Active material: conductive material (carbon black): carboxymethyl cellulose (CMC): styrene butadiene rubber (SBR) were used at a weight ratio of 8:1:0.5:0.5, using the final negative electrode material powder as the active material, a copper foil having a thickness of 17 μm was coated with the material, and then the foil was dried at 90°C for 40 minutes. After drying, the foil was punched with a diameter of 14 mm, metal lithium having a diameter of 16 mm was used as a counter electrode, and an electrolyte solution was filled with a separator having a diameter of 18 mm in between, thereby manufacturing a CR2032 coin-type half battery. A solvent of ethylene carbonate (EC)/diethyl carbonate (DEC) mixed at a volume ratio of 1:1 as the electrolyte solution was dissolved in 1 M LiPF$_6$, and 3 wt% of fluoroethylene carbonate (FEC) was used as an additive. A formation process was performed by charging (lithiating) the manufactured battery to 0.005 V at a constant current of 0.1 C, charging the battery at a constant voltage of 0.005 V until it reached 0.01 C, discharging (de-lithiating) the battery to 1.5 V at a constant current of 0.1 C (first formation step), charging (lithiating) the battery again to 0.005 V at a constant current of 0.1 C, charging the battery at a constant voltage of 0.005 V until it reached 0.01 C, and then discharging (de-lithiating) the battery to 1.0 V at a constant current of 0.1 C (second formation step).

Charge/discharge cycle conditions: charging (lithiation) to 0.005 V at a constant current of 0.5 C, charging at a constant voltage of 0.005 V until it reached 0.05 C, and discharging (de-lithiation) to 1.0 V at a constant current of 0.5 C

Number of charge/discharge cycles: 50

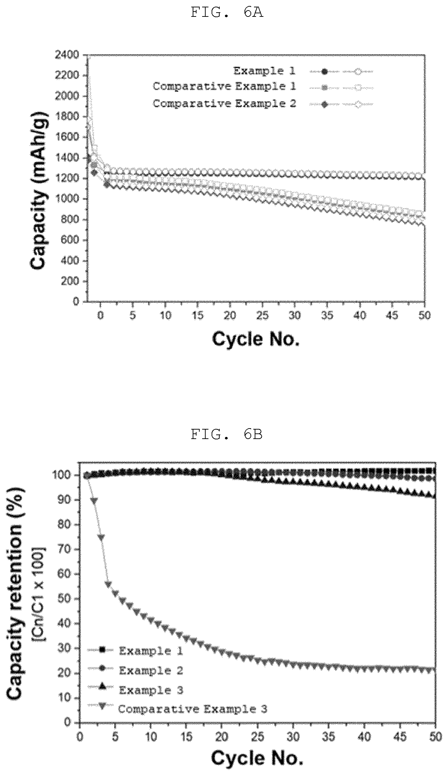

The discharge capacity of the first formation step is summarized as the capacity in Table 1, the initial efficiency based on charge/discharge in the first formation step and the capacity retention rate according to C50/C1*100 after the formation process are summarized in Table 1, and the first formation step, the second formation step, and the charge/discharge capacity and the capacity retention rate depending on the charge/discharge cycle are shown in FIG. 6A and FIG. 6B.

[Table 1]

|  | Example 1 | Comparative Example 1 | Comparative Example 2 | Comparative Example 3 |
|---|---|---|---|---|
| Doping element average content A (%) | 8.1 (Mg) | 8.3 (Mg) | 3.9 (Mg) | - |
| Standard deviation B | 2.01 | 2.08 | 2.68 | - |
| Bulk residual stress (GPa) | -0.74 | Amorphous | 0.43 | 0 |
| Powder residual stress (GPa) | -0.29 | Amorphous | 0.92 | 0 |
| Particle compressive strength (MPa) | 171 | 115 | 95 | 105 |
| Capacity (mAh/g) | 1410 | 1386 | 1376 | 3127 |
| Initial efficiency (%) | 82.9 | 57.9 | 77.5 | 84.7 |
| Capacity retention rate (%, C50/C1×100) | 98.4 | 72.1 | 68.7 | 19.6 |

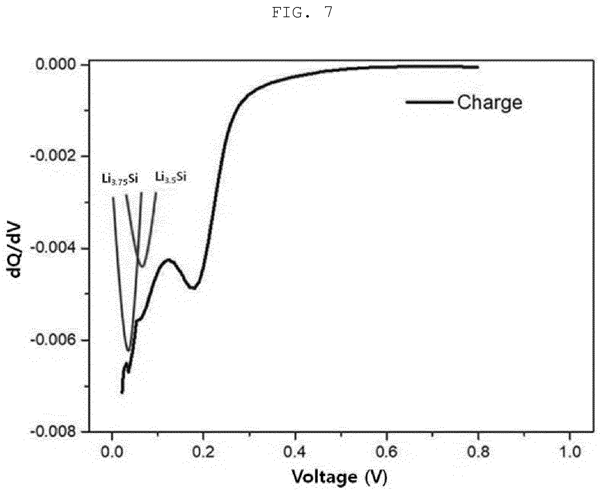

FIG. 7 is a drawing illustrating a dQ/dV graph in the first charge/discharge cycle, and as seen in FIG. 7, it was found that there was a lithium insertion peak corresponding to a $Li_{3.75}Si$ reaction. Thus, it was found that in the lithiation of the negative electrode material prepared in Example 1, lithiation was performed at an alloying ratio of 3.75 mol of lithium per 1 mol of silicon.

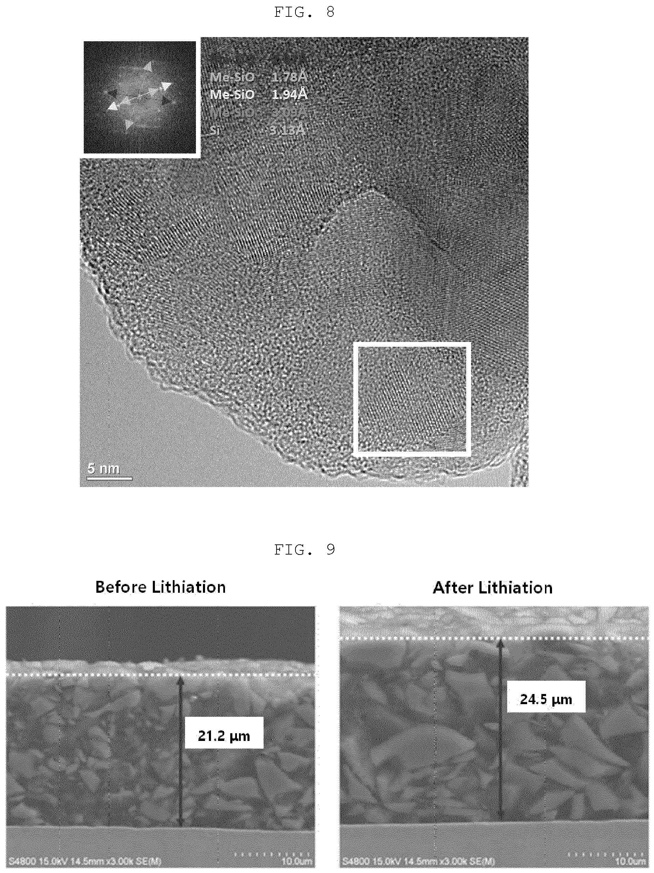

FIG. 8 is a drawing illustrating a high-resolution transmission electron microscope (HR-TEM) image of Example 1. It was confirmed from FIG. 8 that the average diameter of crystalline silicon nanoparticles was about 7.1 nm, and as a result of a selected area diffraction pattern (SADP) analysis, it was confirmed that the matrix contained crystalline magnesium silicate, and the silicon nanoparticles formed a coherent interface with crystalline magnesium silicate.

Though it was not shown, as a result of measuring the particle size distribution of crushed and carbon-coated negative electrode material powder, it was confirmed that the negative electrode material powder particles had a particle size of 7.9 $\mu$m on average (D50).

FIG. 9 is a scanning electron micrograph in which the cross section and the thickness of a negative electrode before lithiation were observed, and a scanning electron micrograph in which the cross section and the thickness of the negative electrode were observed after lithiation at 0.005 V in the third charge/discharge cycle (first charge/discharge cycle in a life evaluation step). It was confirmed that the volume expansion rate was only about 15.5% due to the thickness change before and after lithiation.

The negative electrode material for a secondary battery according to the present invention is in a particle form including: a matrix including a silicon oxide, a composite oxide of silicon and one or more doping elements selected from the group consisting of alkali metals, alkaline earth metals, and post transition metals, or a mixture thereof; and silicon nanoparticles having residual compressive stress dispersed and embedded in the matrix, and has improved mechanical and electrochemical properties and secures structural integrity of the negative electrode material based on excellent compressive strength properties of particles to have a capacity retention rate at a level of practical commercialization of a secondary battery provided with the silicone-based negative electrode material together with a high discharge capacity.

**Claims**

1. A negative electrode material for a secondary battery in a particle form, comprising:

   a matrix including a silicon oxide, a composite oxide of silicon and one or more doping elements selected from the group consisting of alkali metals, alkaline earth metals, and post transition metals, or a mixture thereof; and crystalline silicon nanoparticles dispersed and embedded in the matrix,
   wherein a compressive strength of the particles is 100 MPa or more, and a ratio ($A_1/A_2$) between an area of a first peak ($A_1$) and an area of a second peak ($A_2$) is 0.8 to 6, a diffraction angle $2\theta$ being positioned in a range of 10° to 27.4° in the first peak and being positioned in a range of $28 \pm 0.5°$ in the second peak, in an X-ray diffraction pattern using a CuK$\alpha$ ray.

2. The negative electrode material for a secondary battery of claim 1, wherein in the X-ray diffraction pattern, a ratio ($L_1/L_2$) of a full-width at half maximum (FWHM) ($L_1$) of the first peak to a full-width at half maximum (FWHM) ($L_2$) is 6 to 15 and wherein an intensity ratio ($I_1/I_2$) of a maximum intensity ($I_1$) of the first peak to a maximum intensity ($I_2$) of the second peak is 0.05 to 1.25.

3. The negative electrode material for a secondary battery of claim **1,** wherein the first peak is derived from an amorphous silicon oxide, and the second peak is derived from crystalline silicon.

4. The negative electrode material for a secondary battery of claim 1, wherein an FWHM of a Raman peak of nanoparticulate silicon contained in the negative electrode material is larger than an FWHM of a Raman peak of bulk monocrystalline silicon, wherein preferably, the FWHM of the Raman peak of the nanoparticulate silicon contained in the negative electrode material is 4 to 20 cm$^{-1}$.

5. The negative electrode material for a secondary battery of claim 4, wherein the following Equation 1 is satisfied based on a silicon Raman signal:

$$\text{(Equation 1)}$$

$$1 < WN(Si)/WN(ref)$$

wherein WN(ref) is a central wave number of a Raman peak of bulk monocrystalline silicon, and WN(Si) is a central wave number of a Raman peak of nanoparticulate silicon included in the negative electrode material.

6. The negative electrode material for a secondary battery of claim 5, wherein in a two-dimensional mapping analysis based on the silicon Raman signal, a difference between a maximum value and a minimum value of shift as defined by the following Equation 2 under the following mapping conditions is 5 cm$^{-1}$ or less:

mapping conditions: excitation laser wavelength = 532 nm, laser power = 0.1 mW, detector exposure time (exposure time per unit analysis area) = 1 sec, focal length = 30 mm, grating = 1800 grooves/mm, pixel resolution = 1cm$^{-1}$, mapping size = 14 $\mu$m $\times$ 14 $\mu$m,

$$(Equation\ 2)$$

$$Shift\ =\ WN^i(Si)-WN(ref)$$

wherein WN(ref) is as defined in Equation 1, and WN$^i$(Si) is a central wave number of a Raman peak of nanoparticulate silicon included in the negative electrode material in one pixel which is a unit analysis area in a mapping analysis.

7. The negative electrode material for a secondary battery of claim 6, wherein a difference between a maximum value and a minimum value of shift as defined by the following Equation 2 is 5 cm$^{-1}$ or less, in a shift analysis based on the silicon Raman signal at 20 random positions different from each other in a 20 mm x 20 mm specimen:

mapping conditions: excitation laser wavelength = 532 nm, laser power = 0.1 mW, detector exposure time (exposure time per unit analysis area) = 1 sec, focal length = 30 mm, grating = 1800 grooves/mm, pixel resolution = 1cm$^{-1}$

$$(Equation\ 2)$$

$$Shift\ =\ WN^i(Si)-WN(ref)$$

wherein WN(ref) is as defined in Equation 1, and WN$^i$(Si) is a central wave number of a Raman peak of nanoparticulate silicon included in the negative electrode material in one pixel which is a unit analysis area in a mapping analysis.

8. The negative electrode material for a secondary battery of claim 1, wherein when a stress of silicon nanoparticles is analyzed at 20 random positions different from each other in a 20 mm x 20 mm specimen, a compressive stress is 80% or more.

9. The negative electrode material for a secondary battery of claim 1, wherein the negative electrode material includes a plurality of negative electrode materials, and has composition uniformity between particles according to the following Equation 3:

$$(Equation\ 3)$$

$$1.3\ \leq\ UF(D)$$

wherein UF(D) is a value obtained by dividing an average doping element composition between negative electrode material particles by a standard deviation of a doping element composition, based on wt% composition, wherein the composition uniformity according to the Equation 3 is measured by the method disclosed under Experimental Example 1 of the description.

10. The negative electrode material for a secondary battery of claim 1, wherein the silicon nanoparticles have an average diameter of 2 to 30 nm.

11. The negative electrode material for a secondary battery of claim 1, wherein an interface between the silicon nanoparticles and the matrix is a coherent interface.

12. The negative electrode material for a secondary battery of claim 1, wherein the doping element is one or more selected from lithium (Li), sodium (Na), potassium (K), rubidium (Rb), cesium (Cs), beryllium (Be), magnesium (Mg), calcium (Ca), strontium (Sr), barium (Ba), aluminum (Al), gallium (Ga), indium (In), tin (Sn), and bismuth (Bi).

13. The negative electrode material for a secondary battery of claim 1, wherein the negative electrode material is in a particle form having an average diameter in an order of $10^0$ μm to $10^1$ μm.

14. The negative electrode material for a secondary battery of claim 1, further comprising: a coating layer containing carbon.

15. A secondary battery comprising the negative electrode material of any one of the preceding claims.

**Patentansprüche**

1. Negatives Elektrodenmaterial für eine Sekundärbatterie in Partikelform, umfassend:

   eine Matrix, die ein Siliziumoxid, ein Siliziumverbundoxid und ein oder mehrere Dotierelemente umfasst, die aus der Gruppe ausgewählt sind, die aus Alkalimetallen, Erdalkalimetallen und Postübergangsmetallen oder einer Mischung davon besteht; und
   Nanopartikel aus kristallinem Silizium, die in der Matrix dispergiert und eingebettet sind,
   wobei die Druckfestigkeit der Partikel 100 MPa oder mehr beträgt und ein Verhältnis ($A_1/A_2$) einer Fläche eines ersten Peaks ($A_1$) zu einer Fläche eines zweiten Peaks ($A_2$) 0,8 bis 6 beträgt, wobei ein Beugungswinkel $2\theta$ in einem Bereich von 10° bis 27,4° in dem ersten Peak und in einem Bereich von 28 +/-0,5° in dem zweiten Peak in einem Röntgenbeugungsmuster unter Verwendung eines CuKα-Strahls liegt.

2. Negatives Elektrodenmaterial für eine Sekundärbatterie gemäß Anspruch 1, wobei in dem Röntgenbeugungsmuster ein Verhältnis ($L_1/L_2$) einer Halbwertsbreite (FWHM) ($L_1$) des ersten Peaks zu einer Halbwertsbreite (FWHM) ($L_2$) 6 bis 15 beträgt und in dem ein Intensitätsverhältnis ($I_1$)/$I_2$) einer maximalen Intensität ($I_1$) des ersten Peaks zu einer maximalen Intensität ($I_2$) des zweiten Peaks 0,05 bis 1,25 beträgt.

3. Negatives Elektrodenmaterial für eine Sekundärbatterie gemäß Anspruch 1, wobei der erste Peak von einem amorphen Siliziumoxid abgeleitet ist und der zweite Peak von kristallinem Silizium abgeleitet ist.

4. Negatives Elektrodenmaterial für eine Sekundärbatterie gemäß Anspruch 1, wobei eine FWHM eines Raman-Peaks von nanopartikulärem Silizium, das in dem negativen Elektrodenmaterial enthalten ist, größer ist als eine FWHM eines Raman-Peaks von massivem einkristallinem Silizium, wobei bevorzugt die FWHM des Raman-Peaks des in dem negativen Elektrodenmaterial enthaltenen nanopartikulären Siliziums 4 bis 20 cm$^{-1}$ beträgt.

5. Negatives Elektrodenmaterial für eine Sekundärbatterie gemäß Anspruch 4, wobei die folgende Gleichung 1 auf Grundlage eines Silizium-Raman-Signals erfüllt ist:

$$(\text{Gleichung 1})$$
$$1 < WN(Si)/WN(ref)$$

wobei WN(ref) eine zentrale Wellenzahl eines Raman-Peaks von massivem einkristallinem Silizium ist und WN(Si) eine zentrale Wellenzahl eines Raman-Peaks von nanopartikulärem Silizium ist, das in dem negativen Elektrodenmaterial enthalten ist.

6. Negatives Elektrodenmaterial für eine Sekundärbatterie gemäß Anspruch 5, wobei in einer zweidimensionalen Kartierungsanalyse auf der Grundlage des Silizium-Raman-Signals eine Differenz zwischen einem Maximalwert und einem Minimalwert der Verschiebung, wie durch die folgende Gleichung 2 unter den folgenden Mapping-Bedingungen definiert, 5 cm$^{-1}$ oder weniger beträgt:

   Mapping-Bedingungen: Wellenlänge des Anregungslasers = 532 nm, Laserleistung = 0,1 mW, Belichtungszeit des Detektors (Belichtungszeit pro Analyseeinheit) = 1 Sekunde, Brennweite = 30 mm, Gitter = 1800 Rillen/mm, Pixelauflösung = 1 cm$^{-1}$, Kartierungsgröße = 14 $\mu$m x 14 $\mu$m,

$$\text{(Gleichung 2)}$$
$$\text{Verschiebung} = WN^i(Si) - WN(ref)$$

wobei WN(ref) wie in Gleichung 1 definiert ist und WN$^i$ (Si) eine zentrale Wellenzahl eines Raman-Peaks von nanopartikulärem Silizium ist, das in dem negativen Elektrodenmaterial in einem Pixel enthalten ist, das ein Einheitsanalysebereich in einer Kartierungsanalyse ist.

7. Negatives Elektrodenmaterial für eine Sekundärbatterie gemäß Anspruch 6, wobei eine Differenz zwischen einem Maximalwert und einem Minimalwert der Verschiebung, wie durch die folgende Gleichung 2 definiert, 5 cm$^{(-1)}$ oder weniger in einer Offset-Analyse auf Grundlage des Silizium-Raman-Signals an 20 voneinander zufällig ausgewählten Positionen in einer Probe von 20 mm x 20 mm beträgt;

Mapping-Bedingungen: Anregungslaserwellenlänge = 532 nm, Laserleistung = 0,1 mW, Detektorbelichtungszeit (Belichtungszeit pro Analyseeinheit) = 1 Sekunde, Brennweite = 30 mm, Gitter = 1800 Rillen/mm, Pixelauflösung = 1 cm$^{-1}$

$$\text{(Gleichung 2)}$$
$$\text{Verschiebung} = WN^i \ (Si) - WN(ref)$$

wobei WN(ref) wie in Gleichung 1 definiert ist und WN$^i$ (Si) eine zentrale Wellenzahl eines Raman-Peaks von nanopartikulärem Silizium ist, das in dem negativen Elektrodenmaterial in einem Pixel enthalten ist, das ein Einheitsanalysebereich in einer Kartierungsanalyse ist.

8. Negatives Elektrodenmaterial für eine Sekundärbatterie gemäß Anspruch 1, wobei eine Spannung von Siliziumnanopartikeln an 20 voneinander zufällig ausgewählten Positionen in einer Probe mit 20 mm x 20 mm analysiert wird, eine Druckspannung von 80 % oder mehr beträgt.

9. Negatives Elektrodenmaterial für eine Sekundärbatterie gemäß Anspruch 1, wobei das negative Elektrodenmaterial eine Vielzahl von negativen Elektrodenmaterialien umfasst und eine Gleichmäßigkeit der Zusammensetzung zwischen den Partikeln gemäß der folgenden Gleichung 3 besitzt:

$$\text{(Gleichung 3)}$$
$$1,3 \leq UF(D)$$

wobei UF(D) ein Wert ist, der durch Division einer durchschnittlichen Dotierstoffzusammensetzung zwischen Partikeln des negativen Elektrodenmaterials durch eine Standardabweichung einer Dotierstoffzusammensetzung auf Grundlage einer Zusammensetzung in Gewichtsprozent erhalten wird, wobei die Gleichmäßigkeit der Zusammensetzung gemäß Gleichung 3 durch das in Beispiel 1 der Beschreibung offenbarte Verfahren gemessen wird.

10. Negatives Elektrodenmaterial für eine Sekundärbatterie gemäß Anspruch 1, wobei die Silizium-Nanopartikel einen durchschnittlichen Durchmesser von 2 bis 30 nm aufweisen.

11. Negatives Elektrodenmaterial für eine Sekundärbatterie gemäß Anspruch 1, wobei eine Grenzfläche zwischen den Silizium-Nanopartikeln und der Matrix eine kohärente Grenzfläche ist.

12. Negatives Elektrodenmaterial für eine Sekundärbatterie gemäß Anspruch 1, wobei das Dotierungselement ein oder mehrere Elemente ist, die aus Lithium (Li), Natrium (Na), Kalium (K), Rubidium (Rb), Cäsium (Cs), Beryllium (Be), Magnesium (Mg), Calcium (Ca), Strontium (Sr), Barium (Ba), Aluminium (Al), Gallium (Ga), Indium (In), Zinn (Sn) und Wismut (Bi) ausgewählt sind.

13. Negatives Elektrodenmaterial für eine Sekundärbatterie gemäß Anspruch 1, wobei das negative Elektrodenmaterial in einer partikulären Form mit einem durchschnittlichen Durchmesser in der Größenordnung von 10$^0$ $\mu$m bis 10$^1$ $\mu$m

vorliegt.

**14.** Negatives Elektrodenmaterial für eine Sekundärbatterie gemäß Anspruch 1, welches ferner umfasst: eine kohlenstoffhaltige Beschichtungsschicht.

**15.** Sekundärbatterie, die das negative Elektrodenmaterial gemäß einem der vorstehenden Ansprüche umfasst.


**Revendications**

**1.** Matériau d'électrode négative pour une batterie secondaire sous une forme particulaire, comprenant :

une matrice incluant un oxyde de silicium, un oxyde composite de silicium et un ou plusieurs éléments dopants choisis dans le groupe constitué de métaux alcalins, de métaux alcalino-terreux et de métaux de post-transition, ou d'un mélange de ceux-ci ; et
des nanoparticules de silicium cristallin dispersées et incorporées dans la matrice,
dans lequel une résistance à la compression des particules est de 100 MPa ou plus, et un rapport ($A_1/A_2$) d'une zone d'un premier pic ($A_1$) à une zone d'un second pic ($A_2$) est de 0,8 à 6, un angle de diffraction $2\theta$ étant positionné dans une plage de 10° à 27,4° dans le premier pic et étant positionné dans une plage de 28 +/- 0,5° dans le second pic, dans un schéma de diffraction de rayons X utilisant un rayon CuK$\alpha$.

**2.** Matériau d'électrode négative pour une batterie secondaire selon la revendication 1, dans lequel dans le schéma de diffraction de rayons x, un rapport ($L_1/L_2$) d'une pleine largeur à mi-maximum (FWHM) ($L_1$) du premier pic à une pleine largeur à mi-maximum (FWHM) ($L_2$) est de 6 à 15 et dans lequel un rapport d'intensité ($I_1/I_2$) d'une intensité maximale ($I_1$) du premier pic à une intensité maximale ($I_2$) du second pic est de 0,05 à 1,25.

**3.** Matériau d'électrode négative pour une batterie secondaire selon la revendication 1, dans lequel le premier pic est dérivé d'un oxyde de silicium amorphe et le second pic est dérivé de silicium cristallin.

**4.** Matériau d'électrode négative pour une batterie secondaire selon la revendication 1, dans lequel une FWHM d'un pic Raman de silicium nanoparticulaire contenu dans le matériau d'électrode négative est supérieure à une FWHM d'un pic Raman de silicium monocristallin massif, dans lequel de préférence la FWHM du pic Raman du silicium nanoparticulaire contenu dans le matériau d'électrode négative est de 4 à 20 cm$^{-1}$.

**5.** Matériau d'électrode négative pour une batterie secondaire selon la revendication 4, dans lequel l'Équation 1 suivante est satisfaite sur la base d'un signal Raman de silicium :

$$\text{(Équation 1)}$$

$$1 < WN(Si)/WN(ref)$$

dans lequel WN(ref) est un numéro d'onde central d'un pic Raman de silicium monocristallin massif, et WN(Si) est un numéro d'onde central d'un pic Raman de silicium nanoparticulaire inclus dans le matériau d'électrode négative.

**6.** Matériau d'électrode négative pour une batterie secondaire selon la revendication 5, dans lequel dans une analyse de cartographie bidimensionnelle basée sur le signal Raman de silicium, une différence entre une valeur maximale et une valeur minimale de décalage telle que définie par l'Équation 2 suivante sous les conditions de cartographie suivantes est de 5 cm$^{-1}$ ou moins :

conditions de cartographie : longueur d'onde de laser d'excitation = 532 nm, puissance de laser = 0,1 mW, temps d'exposition de détecteur (temps d'exposition par zone d'analyse unitaire) = 1 seconde, distance focale = 30 mm, réseau = 1800 rainures/mm, résolution de pixels = 1 cm$^{-1}$, taille de cartographie = 14 $\mu$m x 14 $\mu$m,

$$\text{(Équation 2)}$$

$$\text{Décalage} = WN^i(Si) - WN(ref)$$

dans lequel WN(ref) est tel que défini dans l'Équation 1, et WN$^i$(Si) est un numéro d'onde central d'un pic Raman de silicium nanoparticulaire inclus dans le matériau d'électrode négative dans un pixel qui est une zone d'analyse unitaire dans une analyse de cartographie.

7. Matériau d'électrode négative pour une batterie secondaire selon la revendication 6, dans lequel une différence entre une valeur maximale et une valeur minimale de décalage telle que définie par l'Équation 2 suivante est de 5 cm$^{-1}$ ou moins, dans une analyse de décalage basée sur le signal Raman de silicium au niveau de 20 positions aléatoires différentes les unes des autres dans un échantillon de 20 mm x 20 mm ;

conditions de cartographie : longueur d'onde laser d'excitation = 532 nm, puissance laser = 0,1 mW, temps d'exposition de détecteur (temps d'exposition par unité d'analyse unitaire) = 1 seconde, distance focale = 30 mm, réseau = 1800 rainures/mm, résolution de pixels = 1 cm$^{-1}$

$$\text{(Équation 2)}$$
$$\text{Décalage} = WN^i(Si) - WN(ref)$$

dans lequel WN(ref) est tel que défini dans l'Équation 1, et WN$^i$(Si) est un numéro d'onde central d'un pic Raman de silicium nanoparticulaire inclus dans le matériau d'électrode négative dans un pixel qui est une zone d'analyse unitaire dans une analyse de cartographie.

8. Matériau d'électrode négative pour une batterie secondaire selon la revendication 1, dans lequel une contrainte de nanoparticules de silicium est analysée au niveau de 20 positions aléatoires différentes les unes des autres dans un échantillon de 20 mm x 20 mm, une contrainte en compression est de 80 % ou plus.

9. Matériau d'électrode négative pour une batterie secondaire selon la revendication 1, dans lequel le matériau d'électrode négative inclut une pluralité de matériaux d'électrode négative, et présente une uniformité de composition entre des particules selon l'Équation 3 suivante :

$$\text{(Équation 3)}$$
$$1,3 \leq UF(D)$$

dans lequel UF(D) est une valeur obtenue en divisant une composition d'élément de dopage moyenne entre des particules de matériau d'électrode négative par un écart standard d'une composition d'élément de dopage, sur la base d'une composition en % en poids, dans lequel l'uniformité de composition selon l'Équation 3 est mesurée par le procédé divulgué selon l'Exemple expérimental 1 de la description.

10. Matériau d'électrode négative pour une batterie secondaire selon la revendication 1, dans lequel les nanoparticules de silicium présentent un diamètre moyen de 2 à 30 nm.

11. Matériau d'électrode négative pour une batterie secondaire selon la revendication 1, dans lequel une interface entre les nanoparticules de silicium et la matrice est une interface cohérente.

12. Matériau d'électrode négative pour une batterie secondaire selon la revendication 1, dans lequel l'élément de dopage est un ou plusieurs éléments choisis parmi le lithium (Li), le sodium (Na), le potassium (K), le rubidium (Rb), le césium (Cs), le béryllium (Be), le magnésium (Mg), le calcium (Ca), le strontium (Sr), le baryum (Ba), l'aluminium (Al), le gallium (Ga), l'indium (In), l'étain (Sn) et le bismuth (Bi).

13. Matériau d'électrode négative pour une batterie secondaire selon la revendication 1, dans lequel le matériau d'électrode négative est sous une forme particulaire présentant un diamètre moyen dans un ordre de $10^0$ μm à $10^1$ μm.

14. Matériau d'électrode négative pour une batterie secondaire selon la revendication 1, comprenant en outre : une couche de revêtement contenant du carbone.

15. Batterie secondaire comprenant le matériau d'électrode négative selon l'une quelconque des revendications

précédentes.

FIG. 1

FIG. 2

FIG. 3

FIG. 4

Example 1
-frequency map(520)

Comparative Example 1
-frequency map(520)

Amorphous

Comparative Example 2
-frequency map(520)

FIG. 5

FIG. 6A

FIG. 6B

FIG. 7

FIG. 8

FIG. 9

| Before Lithiation | After Lithiation |
|---|---|

**EP 4 140 950 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021034109 A1
- EP 3748741 A1
- KR 1020200065514
- KR 1020150045336